# EUROPEAN PATENT APPLICATION

(11) **EP 4 810 292 A1**
(43) Date of publication of application: **23.09.2026**
(21) Application number: 26154604.8
(22) Date of filing: 28.01.2026
(51) Int. Cl.: B60K 17/02, B60K 17/26, B60K 17/35

(54) **INLINE DRIVE ASSEMBLY FOR FOUR-WHEEL DRIVE VEHICLE**

(30) Priority: 19.03.2025 US 202563774397 P; 06.11.2025 US 202519381100
(71) Applicant: The Hilliard Corporation, Elmira NY 14902-1504 (US)
(72) Inventor: HEATH, Kelly P, Corning, 14830 (US); PALMER, James E, Elmira Heights, 14903 (US)
(74) Representative: Murgitroyd & Company

(57) **Abstract**

A drive assembly for a vehicle is disclosed that is selectively operable in (i) a full 4x4 configuration, (ii) a 2x4 configuration, and (iii) a 4x4 overrunning configuration. The drive assembly includes an input shaft, an output shaft, an overrunning clutch coupling the input shaft and the output shaft, an input coupler, and an output coupler. The input coupler and the output coupler being engageable with the overrunning clutch.

## Description

### BACKGROUND OF THE DISCLOSURE

Many drive systems exist that provide a mechanism for transmitting power between an input drive, such as a transmission or drive shaft, and one or more output components, such as driven shafts or axles. The ability to control the transmission of power or torque between an input drive and an output drive, including selectively activating and deactivating power transmission, is fundamental to the overall operation of an all-terrain vehicle (ATV).

Current drive systems use different types of clutches and disconnects for controlling power transmission, see for example U.S. Pat. Nos. 7,591,355; 7,849,988; and 8,641,575. Each of the devices shown in those patents includes a friction mechanism (that is, multiple friction plates) to transmit power between input and output drivetrain elements. One drawback to the use of friction plates for a drive mechanism is that wear of the friction clutch material can happen over time due to slipping at engagement or overload. As such, torque capacity of the friction clutch can decrease over time due to wear, which leads to a loss of overall power transmission. Many of these existing devices have power transmitting modes that are always bi-directional. They do not allow a drivetrain to unload at anytime unless the device is turned off completely or in other words in a 2-wheel drive state, thus, only providing two modes of operation - 4x4 or 2x4. Friction mechanisms can also be expensive.

Accordingly, a need exists for improved clutch-based drive systems for power drive trains.

### SUMMARY

In one aspect, a drive assembly for a vehicle is disclosed that includes an input shaft; an output shaft; a coupler; and an overrunning clutch. The drive assembly is operable in a power transmitting and non-overrunning configuration, a non-power transmitting configuration, and a power transmitting and overrunning configuration. (I) in the power transmitting and non-overrunning configuration the input shaft and the output shaft are operatively coupled via the coupler and thereby rotatably secured relative to each other. (II) in the non-power transmitting configuration the input shaft and the output shaft are operatively decoupled and thereby rotatable relative to each other; and (III) in the power transmitting and overrunning configuration the input shaft and the output shaft are operatively coupled via the overrunning clutch such that (A) if the input shaft rotates faster than the output shaft, the overrunning clutch causes the output shaft to accelerate and thereby rotate together with the input shaft, and (B) if the output shaft rotates faster than the input shaft, the overrunning clutch permits the input shaft and the output shaft to rotate relative to each other.

In some embodiments, the coupler is axially movable relative to the input shaft and the output shaft. The coupler may be disengaged from one of the input shaft and the output shaft in the non-power transmitting configuration.

In some embodiments, the coupler may include an input coupler rotatably secured relative to and translatable along the input shaft. The overrunning clutch may include a clutch hub rotatable relative to the input shaft; and a clutch output rotatably secured relative to the output shaft. In an embodiment, in the power transmitting and non-overrunning configuration the input coupler contacts and rotatably drives the clutch hub in a first input position, the clutch output and the clutch hub rotate together, and the input shaft and the output shaft thereby rotate together.

In some embodiments, the couple may include an output coupler translatable along the output shaft, and in the power transmitting and non-overrunning configuration the output coupler contacts both the clutch hub and the clutch output in a first output position, and the input shaft and the output shaft thereby rotate together.

In some embodiments, in a second output position the output coupler is positioned apart from the clutch hub in the power transmitting and overrunning configuration but is still engaged to the clutch output.

The output coupler may include a base and a plurality of protrusions. The plurality of protrusions contact both the clutch hub and the clutch output in the power transmitting and non-overrunning configuration.

In certain embodiments, in a second input position the input coupler is positioned apart from the clutch hub in the non-power transmitting configuration.

In some embodiments, the overrunning clutch includes a clutch input having a first plurality of teeth, and a clutch output having a second plurality of teeth. In the power transmitting and overrunning configuration (A) if the input shaft rotates faster than the output shaft, the first plurality of teeth drivingly engages the second plurality of teeth to cause the output shaft to accelerate and thereby rotate together with the input shaft, and (B) if the output shaft rotates faster than the input shaft, the second plurality of teeth slips over the first plurality of teeth to permit the input shaft and the output shaft to rotate relative to each other.

The clutch input may be biased toward the clutch output and the first plurality of teeth would thereby be biased into engagement with the second plurality of teeth.

In some embodiments the coupler contacts both the input shaft and the output shaft in the power transmitting and non-overrunning configuration.

The coupler may comprise an output coupler translatable along the output shaft between a first output position and a second output position, and an input coupler rotatably secured relative to and translatable along the input shaft between a first input position and a second input position.

The overrunning clutch may include a clutch hub rotatable relative to the input shaft; and a clutch output rotatably secured relative to the output shaft, and (II) in the non-power transmitting configuration the input coupler is positioned apart from the clutch hub and the output coupler is positioned apart from the input shaft; and (III) in the power transmitting and overrunning configuration the input coupler contacts and rotatably drives the clutch hub, and the output coupler is positioned apart from the input shaft.

In some embodiments the overrunning clutch includes a clutch hub rotatable relative to the input shaft, a clutch output rotatably secured relative to the output shaft; and a plurality of rollers positioned between the clutch hub and the clutch output. In the power transmitting and overrunning configuration (A) if the input shaft rotates faster than the output shaft, the plurality of rollers wedge between the clutch hub and the clutch output to cause the output shaft to accelerate and thereby rotate together with the input shaft, and (B) if the output shaft rotates faster than the input shaft, the plurality of rollers slips between the clutch hub and the clutch output to permit the input shaft and the output shaft to rotate relative to each other.

In some embodiments the drive assembly includes a first actuator; a first fork coupling the first actuator to the input coupler. The first actuator is operable to translate the input coupler along the input shaft from the first input position to the second input position and vice versa. A second actuator and a second fork coupling the second actuator to the output coupler. The second actuator is operable to move the output coupler from the first output position to the second output position and vice versa.

A vehicle is disclosed that includes an engine for transmitting torque to at least one transmission which rotatably drives a front drive shaft and a rear drive shaft. The front drive shaft includes a first drive shaft section and a second drive shaft section that are coupled through a drive assembly according to any of the disclosed embodiments. The drive assembly is electronically coupled to an electronic controller for changing operating modes or configurations of the drive assembly. The first drive shaft section is rotatably coupled to a front differential which rotatably drives front wheels, and the rear drive shaft is rotatably coupled to a rear differential which rotatably drives rear wheels.

### BRIEF DESCRIPTION OF THE DRAWINGS

For the purpose of illustrating the invention, the drawings show a form of the invention which is presently preferred. However, it should be understood that this invention is not limited to the precise arrangements and instrumentalities shown in the drawings.
FIG. 1 is a schematic representation of a drive system incorporating an inline drive assembly according to an embodiment of the present invention.
FIG. 2 is a perspective view of one embodiment of the inline drive assembly for use in the drive system of FIG. 1.
FIG. 3 is an exploded perspective view of internal components of the inline drive assembly of FIG. 2.
FIG. 4 is a side view of the internal components of the inline drive assembly of FIG. 2 in a power transmitting and non-overrunning configuration.
FIG. 5 is a side sectional view of the internal components of the inline drive assembly of FIG. 2 in the power transmitting and non-overrunning configuration.
FIG. 6 is a side view of the internal components of the inline drive assembly of FIG. 2 in a non-power transmitting configuration.
FIG. 7 is a side sectional view of the internal components of the inline drive assembly of FIG. 2 in the non-power transmitting configuration.
FIG. 8 is a side view of the internal components of the inline drive assembly of FIG. 2 in a power transmitting and overrunning configuration.
FIG. 9 is a side sectional view of the internal components of the inline drive assembly of FIG. 2 in the power transmitting and overrunning configuration.
FIG. 10 is a perspective view of an inline drive assembly according to another embodiment of the present invention.
FIG. 11 is an exploded perspective view of internal components of the inline drive assembly of FIG. 10.
FIG. 12 is an exploded perspective view of an input coupler, a clutch hub, a roller cage, and a roller cage anti-rotation plate of the inline drive assembly of FIG. 10.
FIG. 13 is a perspective view of a clutch output and an output shaft 44 of the inline drive assembly of FIG. 10.
FIG. 14 is an exploded perspective view of an input shaft, the output shaft, and an output coupler of the inline drive assembly of FIG. 10.
FIG. 15 is a side sectional view of internal components of the inline drive assembly of FIG. 10 in a power transmitting and non-overrunning configuration.
FIG. 16 is a top sectional view of the internal components of the inline drive assembly of FIG. 10 in the power transmitting and non-overrunning configuration.
FIG. 17 is a side sectional view of the internal components of the inline drive assembly of FIG. 10 in a non-power transmitting configuration.
FIG. 18 is a top sectional view of the internal components of the inline drive assembly of FIG. 10 in the non-power transmitting configuration.
FIG. 19 is a side sectional view of the internal components of the inline drive assembly of FIG. 10 in a power transmitting and overrunning configuration.
FIG. 20 is a top sectional view of the internal components of the inline drive assembly of FIG. 10 in the power transmitting and overrunning configuration.

### DETAILED DESCRIPTION OF THE DRAWINGS

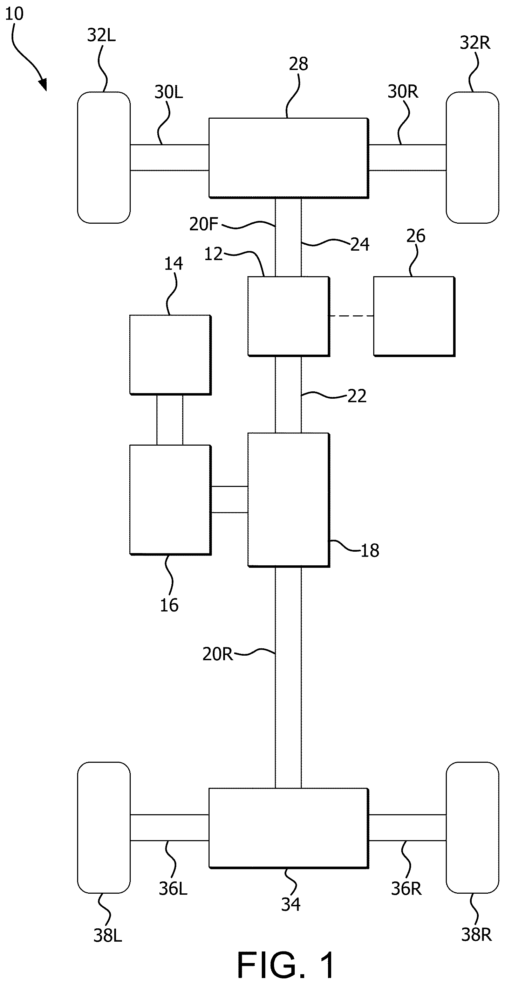

Referring to the drawings, wherein like reference numerals illustrate corresponding or similar elements throughout the several views, FIG. 1 is a schematic representation of an embodiment of a drive system 10 incorporating an inline drive assembly 12, which may also be referred to as a disconnect, according to an embodiment of the present invention. The drive system 10 also includes an engine 14 (such as an internal combustion engine or an electric motor powertrain) that rotatably drives a first transmission 16, such as a continuously variable transmission ("CVT"). The first transmission 16 rotatably drives a second transmission 18, such as a geared transmission, which in turn rotatably drives a front drive shaft 20F and a rear drive shaft 20R. The front drive shaft 20F includes a first drive shaft section 22 and a second drive shaft section 24 that are coupled via the drive assembly 12. The drive assembly 12 is operatively coupled to an electronic controller or power supply 26 and one or more user manipulated controls (not shown - for example, on/off switches or buttons), for changing operating modes or configurations of the drive assembly 12, as described in further detail below. The front drive shaft 20F rotatably drives a front differential 28, which in turn rotatably drives first and second front driven shafts 30L, 30R and front wheels 32L, 32R. The rear drive shaft 20R rotatably drives a rear differential 34, which in turn rotatably drives first and second rear driven shafts 36L, 36R and rear wheels 38L, 38R. In other embodiments, the inline drive assembly 12 may have a different position in the drive system 10, such as along the rear drive shaft 20R. In some embodiments, the second transmission 18, the rear drive shaft 20R, and the rear differential 34 may be combined as a single transaxle.

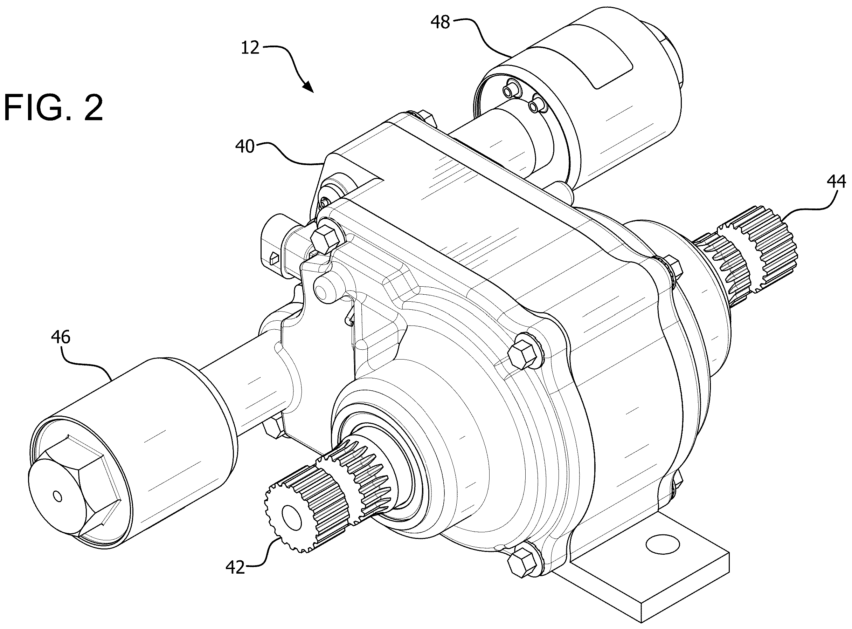

FIG. 2 illustrates the inline drive assembly 12 of the drive system 10, according to one embodiment. The drive assembly 12 includes an outer housing or drive housing 40 that is secured to a frame of a vehicle (not shown) incorporating the drive system 10. The housing 40 rotatably carries or supports an input shaft 42, which may be coupled to or may be the first drive shaft section 22, and an output shaft 44, which may be coupled to or may be the second drive shaft section 24.

The drive assembly 12 is selectively operable in various modes or configurations. More specifically, the drive assembly 12 is selectively operable in (I) a power transmitting and non-overrunning configuration, which may also be referred to as a full 4x4 configuration or a four-wheel drive configuration, (II) a non-power transmitting configuration, which may also be referred to as a 2x4 configuration or a two-wheel drive configuration, and (III) a power transmitting and overrunning configuration, which may also be referred to as a 4x4 overrunning configuration or a four-wheel drive overrunning configuration. In the power transmitting and non-overrunning configuration, the input shaft 42 and the output shaft 44 rotate together with the input shaft 42 transmitting power to the output shaft 44. In the non-power transmitting configuration, the input shaft 42 and the output shaft 44 are rotatable relative to each other and the input shaft 42 does not transmit power to the output shaft 44. In the power transmitting and overrunning configuration, the input shaft 42 and the output shaft 44 are operatively coupled via an overrunning clutch (shown elsewhere) of the drive assembly 12. In this configuration, if the input shaft 42 rotates faster than the output shaft 44, the overrunning clutch causes the output shaft 44 to accelerate and thereby rotate together with the input shaft 42, and if the output shaft 44 rotates faster than the input shaft 42, the overrunning clutch permits the input shaft 42 and the output shaft 44 to rotate relative to each other. These aspects are described in further detail below.

With continued reference to FIG. 2, the drive assembly 12 includes one or more actuators, illustratively a first actuator 46 and a second actuator 48, for reconfiguring the drive assembly 12 between the various configurations described above. The actuators may be linear actuators, more specifically solenoids. However, other actuators could be used, such as a screw drive, worm gear, etc.. The actuators 46, 48 may normally (that is, when not actuated) maintain the drive assembly 12 in the power transmitting and non-overrunning configuration, and the actuators 46, 48 may be actuated to reconfigure the drive assembly 12 to the non-power transmitting configuration and the power transmitting and overrunning configuration, as described below. The drive assembly 12 may include springs (not shown - for example, compression springs or torsion springs) to bias the actuators 46, 48 in their normal, non-actuated positions.

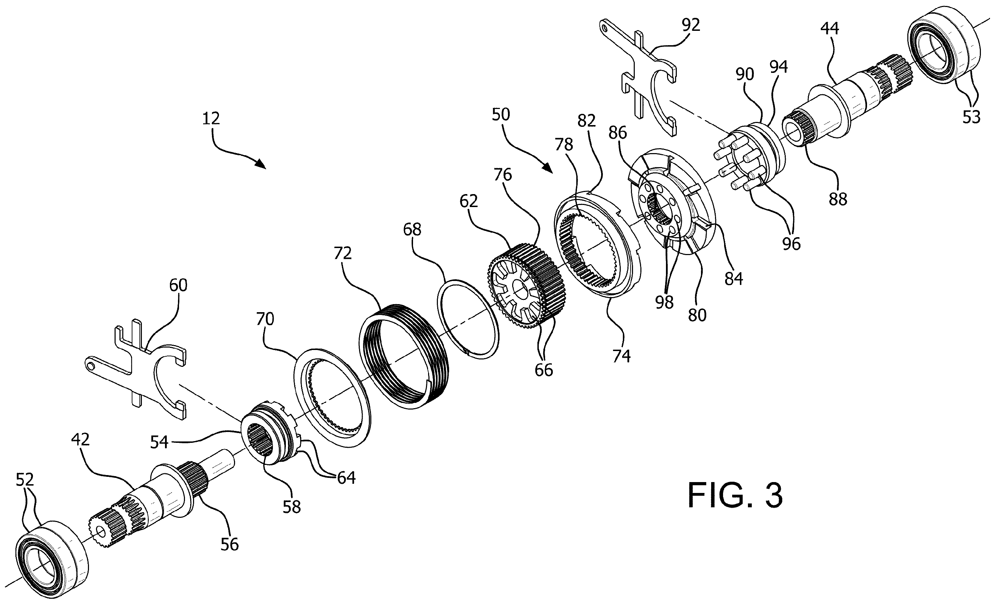

FIG. 3 is an exploded view of the inline drive assembly 12 in which externally visible components, such as the housing 40 and the actuators 46, 48, are hidden to more clearly illustrate internal components. The inline drive assembly 12 generally includes the input shaft 42, the output shaft 44, and the overrunning clutch 50, which couples the input shaft 42 and the output shaft 44. The drive assembly 12 further includes one or more input bearings 52 that rotatably support the input shaft 42 relative to the housing 40, and one or more output bearings 53 that rotatably support the output shaft 44 relative to the housing 40.

An input coupler 54 is rotatably secured relative to and axially translatable along the input shaft 42, illustratively, via a first spline surface 56 formed on the input shaft 42 and a second, mating spline surface 58 formed on the input coupler 54. The input coupler 54 is axially translatably driven along the input shaft 42 preferably via a linkage or fork 60, which is driven by the first actuator 46. The input coupler 54 is selectively engageable, and rotatable, with a clutch hub 62 of the overrunning clutch 50. Illustratively, the input coupler 54 and the clutch hub 62 are selectively engageable via a first plurality of protrusions or teeth 64 on the input coupler 54 that interdigitate or mesh with a second plurality of protrusions or teeth 66 on the clutch hub 62. In other embodiments, the input coupler 54 and the clutch hub 62 may be selectively engageable via other features that rotatably secure these components relative to each other (for example, gear teeth, splines, etc.).

With continued reference to FIG. 3, the overrunning clutch 50 includes the clutch hub 62, which is positioned on and rotatable relative to the input shaft 42. Externally the clutch hub 62 carries a snap ring 68 and a spring support 70. A compression spring 72 is disposed between the spring support 70 and a clutch input 74 carried on the clutch hub 62. The clutch input 74 is rotatably secured relative to and axially translatable along the clutch hub 62, illustratively, via a third spline surface 76 formed on the clutch hub 62 and a fourth, mating spline surface 78 formed on the clutch input 74. As such, the compression spring 72 biases the clutch input 74 toward and into engagement with a clutch output 80, more specifically a first plurality of teeth 82 of the clutch input 74 engage a second plurality of teeth 84 of the clutch output 80. Each tooth 82, 84 includes a circumferentially extending ramp surface and horizontally (axially) extending shoulder surface. The ramp surfaces slope in opposite directions as shown. As such, if the clutch input 74 rotates faster than the clutch output 80, the shoulder surfaces engage, and the clutch input 74 drives the clutch output 80 causes it to accelerate and rotate together with the clutch input 74. If the clutch output 80 rotates faster than the clutch input 74, the ramp surfaces slide over each other thereby not transmitting torque so as to facilitate overrunning and the clutch input 74 and the clutch output 80 rotate relative to each other. The clutch output 80 is rotatably secured relative to the output shaft 44, illustratively, via a fifth spline surface 86 formed on the clutch output 80 and a sixth, mating spline surface 88 formed on the output shaft 44.

With further reference to FIG. 3, the drive assembly 12 further includes an output coupler 90 that is rotatably secured relative to the output shaft 44, via the clutch output 80, and axially translatable along the output shaft 44. The output coupler 90 is axially translatably driven along the output shaft 44 via a linkage or fork 92, which is driven by the second actuator 48. The output coupler 90 is selectively engageable, and rotatable, with the clutch hub 62 of the overrunning clutch 50. More specifically, the output coupler 90 illustratively includes a base 94 coupled to a plurality of protrusions 96, such as pins, that extend preferably axially toward the overrunning clutch 50. The protrusions 96 extend through apertures 98 formed on the clutch output 80 and selectively into apertures (shown elsewhere) formed on the clutch hub 62. As such, and as described in further detail below, the output coupler 90 facilitates rotatably securing the clutch hub 62 and the clutch output 80 relative to each other. The protrusions 96 may be coupled to the base 94 through any well-known means, such as welding or securely inserted into a mating hole, or may be integrally formed with the base 94.

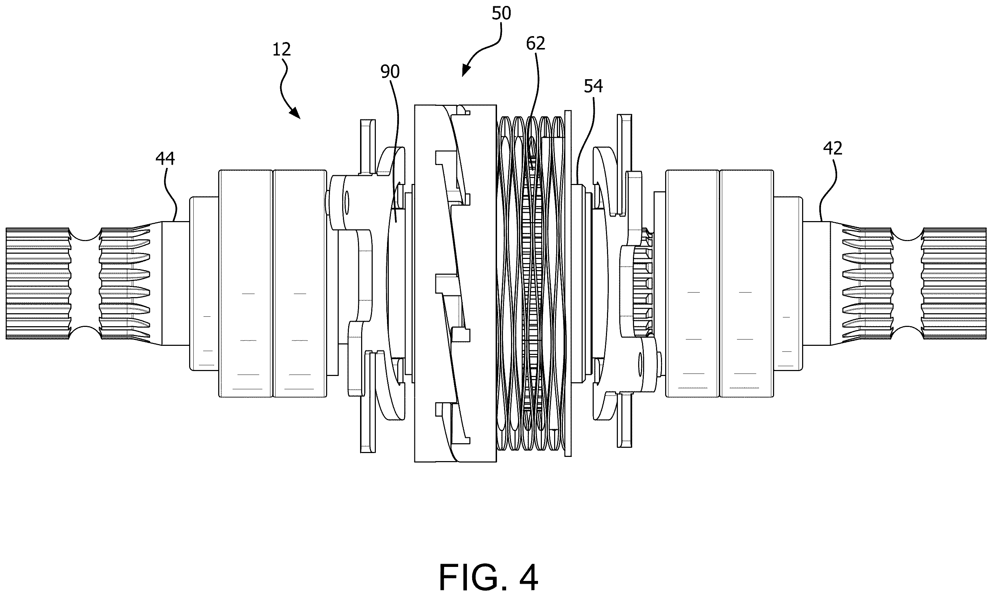

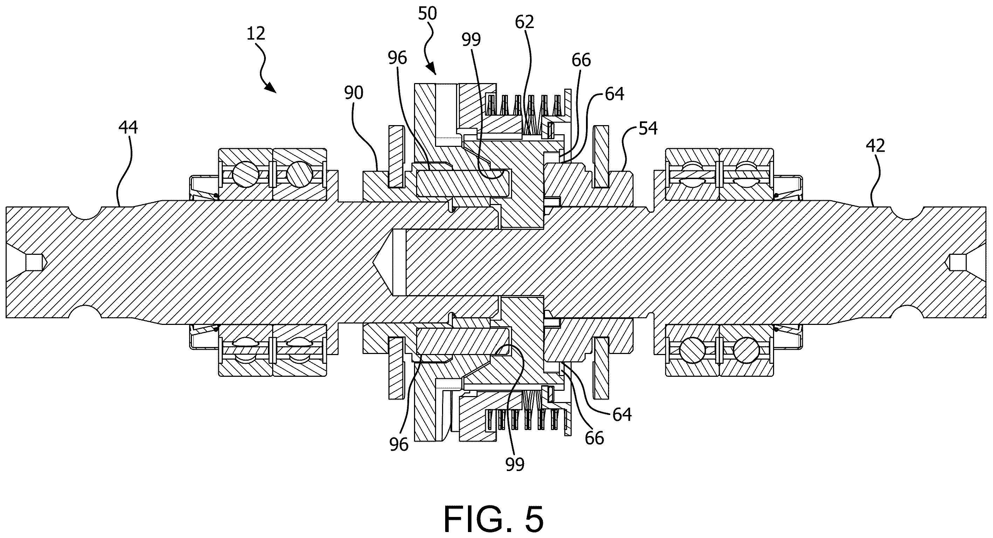

FIGS. 4 and 5 illustrate the internal components of the drive assembly 12 in the power transmitting and non-overrunning configuration. In this configuration, the input coupler 54 occupies a first input position relative to the input shaft 42, and the output coupler 90 occupies a first output configuration relative to the output shaft 44. In the first input position, the input coupler 54 contacts the clutch hub 62, more specifically the protrusions 64 of the input coupler 54 interdigitate or mesh with the protrusions 66 of the clutch hub 62. The input coupler 54 thereby operatively engages the clutch hub 62, and the input shaft 42, via the input coupler 54, is rotatably secured relative to and configured to transmit power to the clutch hub 62. In the first output position, the output coupler 90 contacts the clutch hub 62, more specifically the protrusions 96 of the output coupler 90 are received in the apertures 99 of the clutch hub 62. The output coupler 90 thereby operatively engages the clutch hub 62, and the output shaft 44, via the output coupler 90, the clutch hub 62, and the input coupler 54, is rotatably secured relative to and is configured to receive power from the input shaft 42. Stated another way, in the first input position the input coupler 54 operatively engages the overrunning clutch 50 and in the first output position the output coupler 90 operatively engages the overrunning clutch 50. The input coupler 54 and the output coupler 90 thereby inhibit overrunning operation of the overrunning clutch 50, and the input shaft 42 and the output shaft 44 are thereby rotatable together.

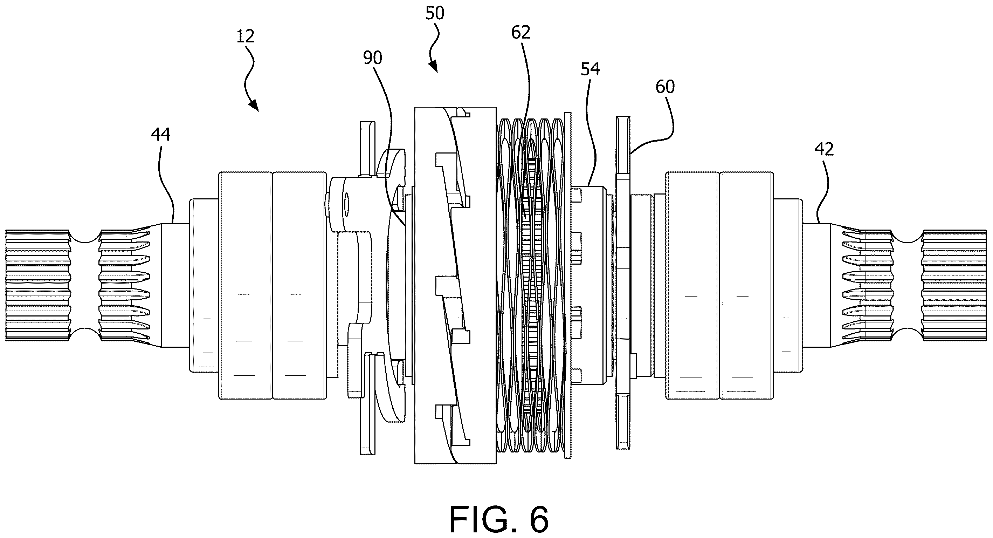

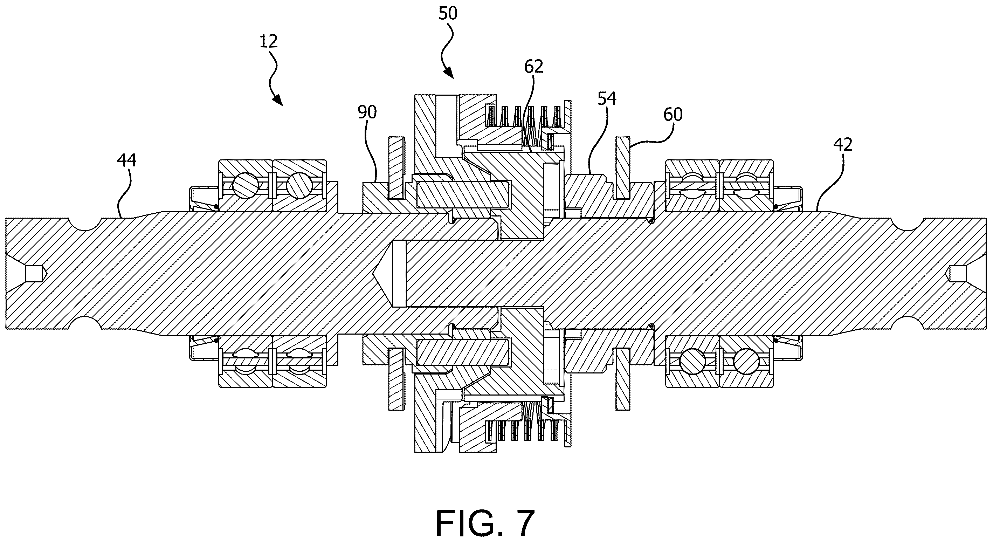

FIGS. 6 and 7 illustrate the internal components of the drive assembly 12 in the non-power transmitting configuration. In this configuration, the input coupler 54 occupies a second input position relative to the input shaft 42. More specifically, the input coupler 54 has been moved from the first input position to the second input position by the first actuator 46 via the fork 60. In the second input position, the input coupler 54 is positioned apart and thereby operatively disengaged from the clutch hub 62, which inhibits power transmission from the input shaft 42 to the clutch hub 62. Additionally, the input shaft 42 is not otherwise operatively engaged with the overrunning clutch 50 or the output shaft 44, and the input shaft 42 and the output shaft 44 are thereby rotatable relative to each other. Illustratively, in this configuration the output coupler 90 may occupy the first output position, although its position has no effect on operation of the drive assembly 12.

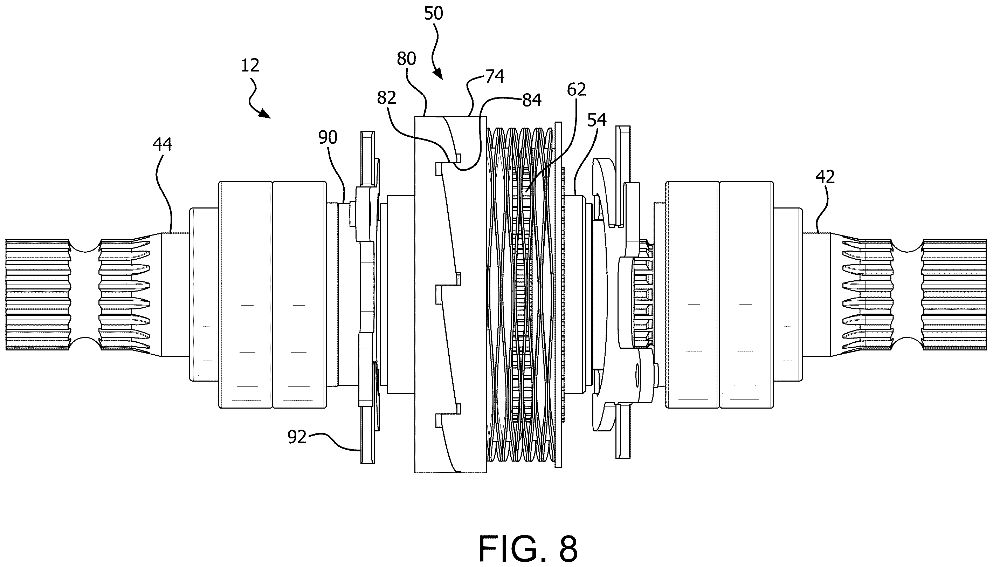

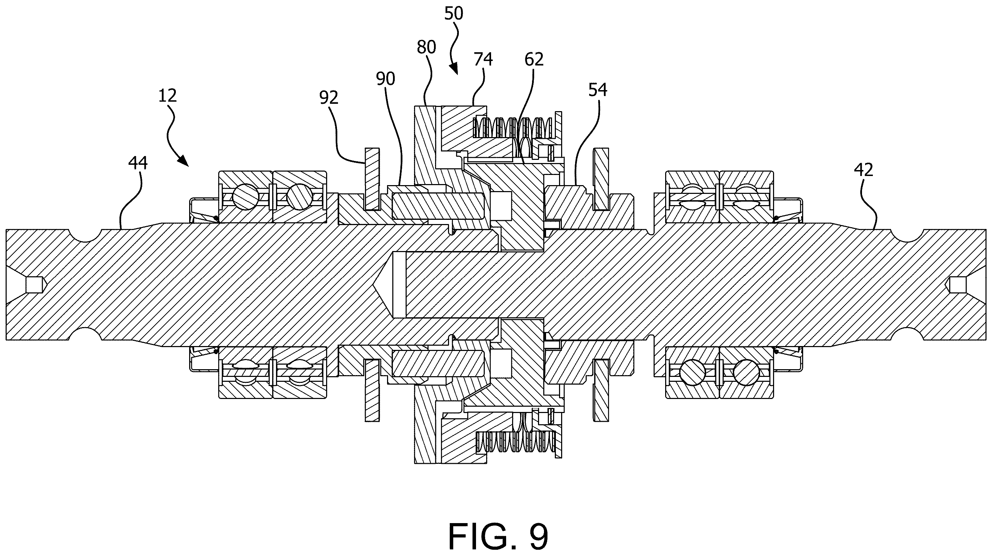

FIGS. 8 and 9 illustrate the internal components of the drive assembly 12 in the power transmitting and overrunning configuration. In this configuration, the input coupler 54 occupies the first input position relative to the input shaft 42, and the output coupler 90 occupies a second output position relative to the output shaft 44. More specifically, the output coupler 90 has been moved (translated) from the first output position to the second output position by the second actuator 48 via the fork 92. In the second output position, the output coupler 90 is positioned apart, and thereby operatively disengaged, from the clutch hub 62. The input shaft 42 and the output shaft 44 are thereby operatively coupled via the overrunning clutch 50 such that (A) if the input shaft 42, the clutch hub 62, and the clutch input 74 rotate faster than the output shaft 44 and the clutch output 80, the clutch input 74 causes the clutch output 80 and the output shaft 44 to accelerate and thereby rotate together with the input shaft 42. More specifically, the teeth 82 of the clutch input 74 drivingly engage the teeth 84 of the clutch output 80. As a result, the input shaft 42 transmits power to the output shaft 44. Conversely, (B) if the output shaft 44 and the clutch output 80 rotate faster than the input shaft 42 and the clutch input 74, the clutch output 80 slips over the clutch input 74 and the input shaft 42 and the output shaft 44 rotate relative to each other. More specifically, the teeth 84 of the output shaft 44 slip over the teeth 82 of the input shaft 42.

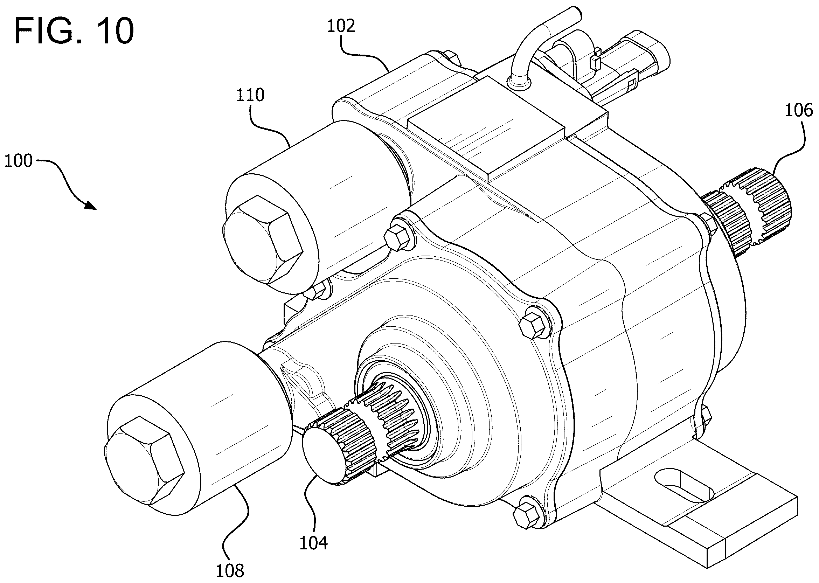

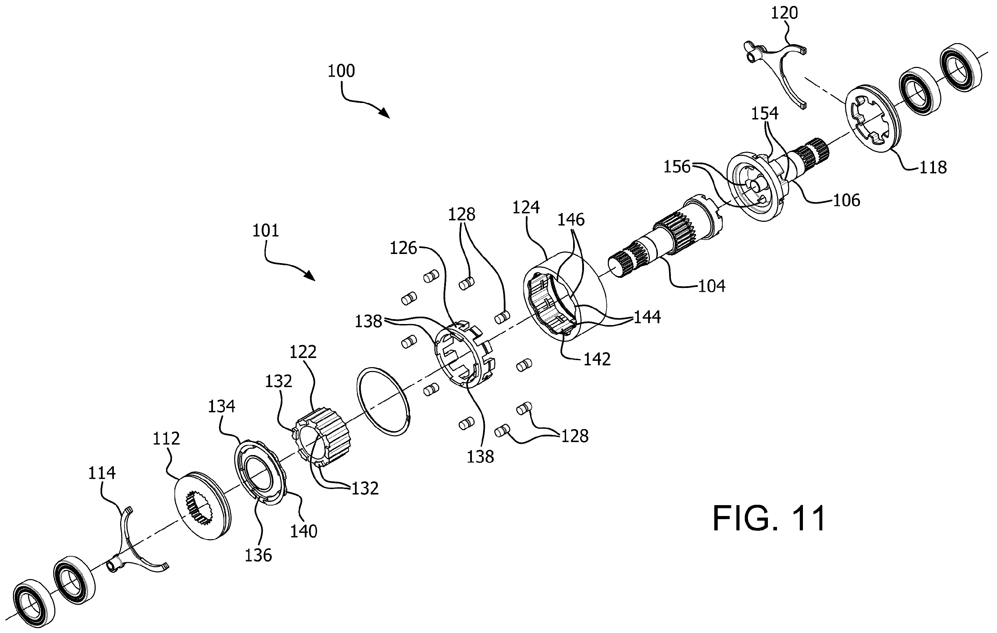

Drive assemblies according to the present invention may include various alternative structures. For example, the drive assembly 12 includes a tooth clutch as the overrunning clutch 50, although alternative drive assemblies according to the present invention include other types of overrunning clutches. For example, the drive assemblies according to the present invention may include sprag clutches, wrap spring clutches, roller clutches, or the like. As another example, FIGS. 10 and 11 illustrate a drive assembly 100 that incorporates a roller clutch 101 (FIG. 11). The drive assembly 100 may be used in the drive system 10 of FIG. 1 instead of the drive assembly 12. The drive assembly 100 is structurally similar to and operates in a similar manner to the drive assembly 12. More specifically, the drive assembly 100 includes an outer housing or drive housing 102 that carries or supports an input shaft 104 and an output shaft 106. The drive assembly 100 further includes one or more actuators, illustratively a first actuator 108 and a second actuator 110, for reconfiguring the drive assembly 100 between various operating modes or configuration. In particular, the drive assembly 100 is operable in (I) a power transmitting and non-overrunning configuration, (II) a non-power transmitting configuration, and (III) a power transmitting and overrunning configuration, which are similar to the operating configurations of the drive assembly 12 described above.

Referring specifically to FIG. 11, the drive assembly 100 includes similar internal components to the drive assembly 12. In particular, the drive assembly 100 includes an input coupler 112 that is axially translatably driven along the input shaft 104 via a linkage or fork 114, which is driven by the first actuator 108, the roller clutch 101, and an output coupler 118 that is axially translatably driven along the output shaft 106 via a linkage or fork 120, which is driven by the second actuator 110. In contrast to the drive assembly 12, the roller clutch 101 generally includes a clutch hub 122 that is rotatable relative to the input shaft 104, a clutch output 124 that is rotatably secured relative to the output shaft 106, and a roller cage 126 and a plurality of rollers 128 positioned between the clutch hub 122 and the clutch output 124.

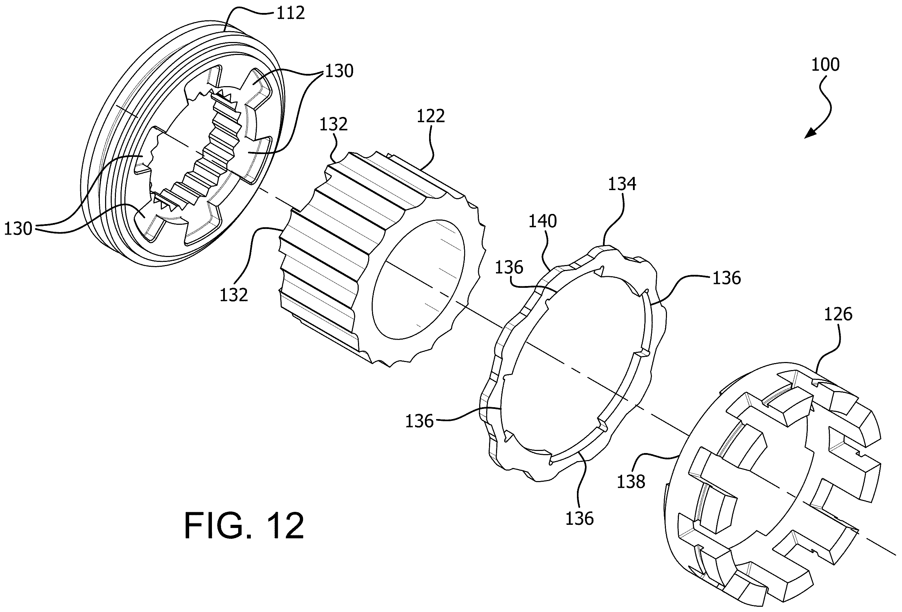

With further reference to FIG. 11 and additional reference to FIG. 12, the input coupler 112 and the clutch hub 122 are selectively engageable via a first plurality of recesses 130 on the input coupler 112 that receive a first plurality of protrusions 132 on the clutch hub 122. In other embodiments, the input coupler 112 and the clutch hub 122 may be selectively engageable via other features that rotatably secure these components relative to each other. The overrunning clutch 101 further includes a roller cage anti-rotation plate 134 that engages the roller cage 126. More specifically, the roller cage anti-rotation plate 134 and the roller cage 126 are engageable via at least one second recess or notch 136 on the roller cage anti-rotation plate 134 that receive a corresponding at least one second protrusion 138 on the roller cage 126. Preferably there are a plurality of second recesses 136 and corresponding plurality of second protrusions 138. The second recesses 136 are angularly wider than the second protrusions 138, thereby permitting limited rotation of the roller cage anti-rotation plate 134 and the roller cage 126 relative to each other. The roller cage anti-rotation plate 134 is also rotatably secured to the clutch output 124, for example, by being positioned in the clutch output 124 and having a contoured outer surface 140 that matches the shape of the inner surface 142 of the clutch output 124. As a result, the roller cage 126 and the clutch output 124 are rotatable relative to each other over a limited range. The limited rotation provided by the second recesses 136 in the second protrusions 138 facilitates maintaining the rollers 128 in contours 144 of the inner surface 142 of the clutch output 124, and inhibits the rollers 128 from moving over ridges 146 between the contours 144. In other embodiments, the roller cage anti-rotation plate 134 and the roller cage 126 may be engageable via other features that permit limited rotation of these components relative to each other.

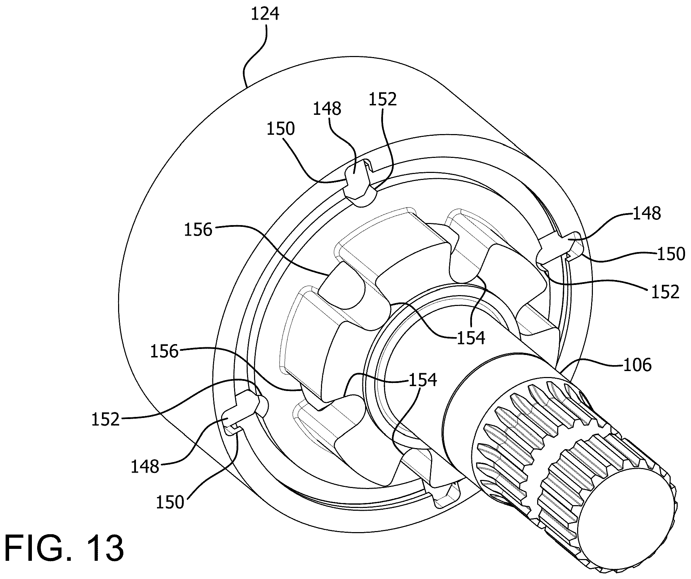

With further reference to FIG. 11 and additional reference to FIG. 13, the clutch output 124 and the output shaft 106 are coupled via tabs 148 received in notches 150, 152 formed on the clutch output 124 and the output shaft 106, and a retaining ring (not shown) secures the tabs 148 relative to the clutch output 124 and the output shaft 106. In other embodiments, the clutch output 124 and the output shaft 106 are coupled in other manners. For example, the clutch output 124 and the output shaft 106 may be monolithically coupled to, or integrally formed with, each other. The output shaft 106 also includes a plurality of slots 154 with apertures 156 for receiving the output coupler 118, as described in further detail below.

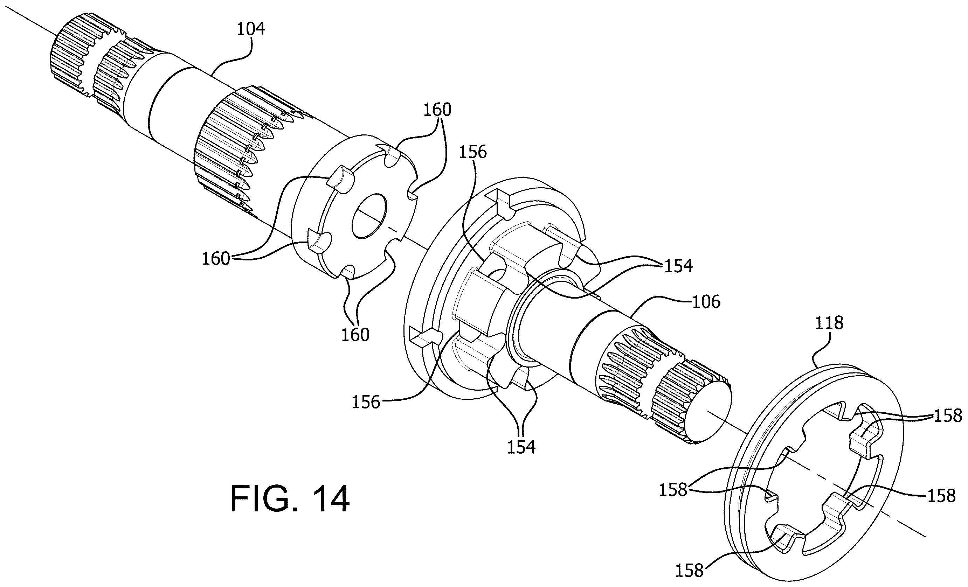

With further reference to FIG. 11 and additional reference to FIG. 14, the output coupler 118 includes a plurality of protrusions 158 that are received in the slots 154 of the output shaft 106. The protrusions 158 also selectively extend through the apertures 156 of the output shaft 106 and into a plurality of notches 160 formed on the input shaft 104. As described in further detail below, the output coupler 118 thereby rotatably secures the output shaft 106 and the input shaft 104 relative to each other.

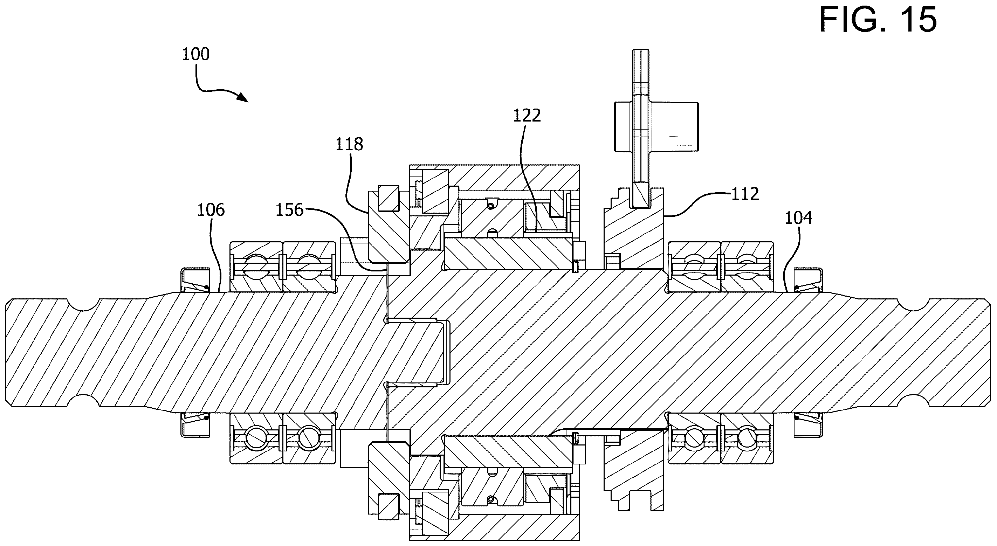

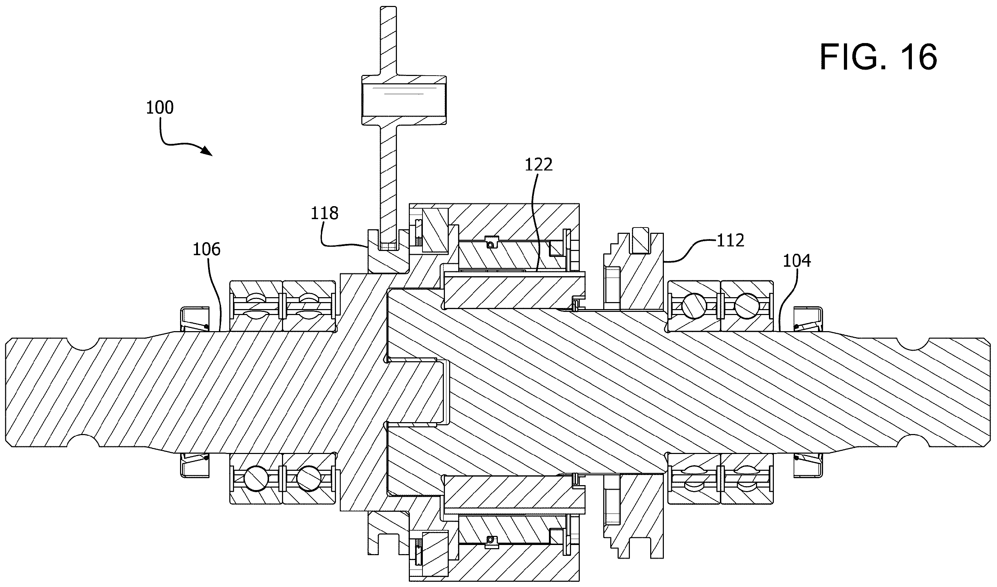

FIGS. 15 and 16 illustrate the internal components of the drive assembly 100 in the power transmitting and non-overrunning configuration. In this configuration, the input coupler 112 occupies a first input position relative to the input shaft 104, and the output coupler 118 occupies a first output configuration relative to the output shaft 106. In the first input position, the input coupler 112 is positioned apart and thereby operatively disengaged from the clutch hub 122, which inhibits power transmission from the input shaft 104 to the clutch hub 122. In the first output position, the output coupler 118 contacts both the output shaft 106 and, by extending through the apertures 156 of the output shaft 106, the input shaft 104. The output coupler 118 thereby rotatably secures the input shaft 104 and the output shaft 106, and the output shaft 106 is configured to receive power from the input shaft 104.

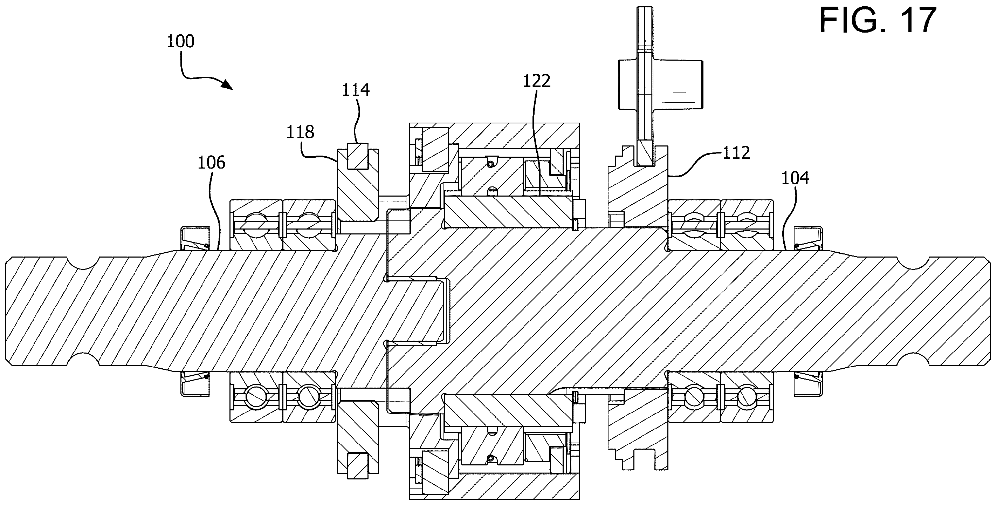

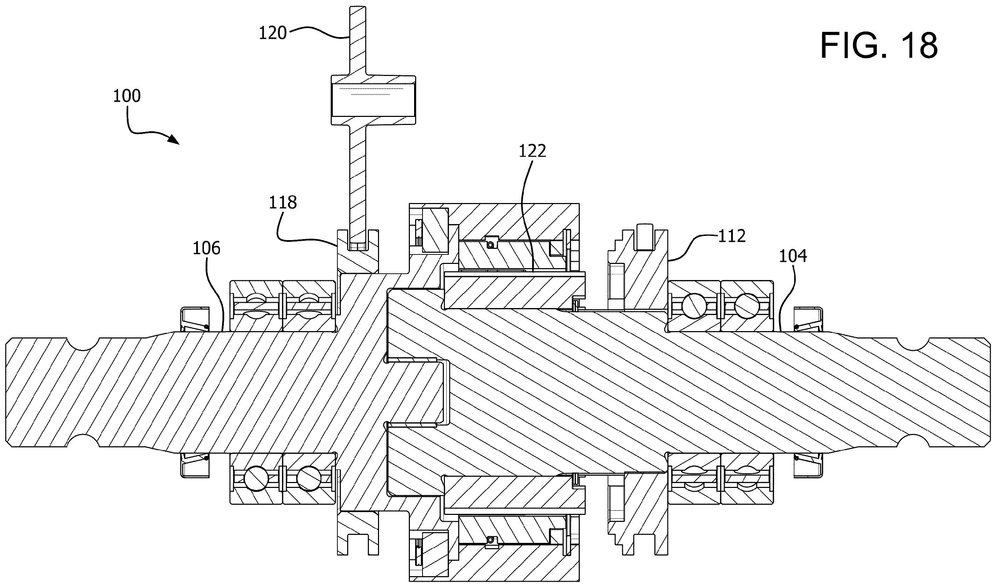

FIGS. 17 and 18 illustrate the internal components of the drive assembly 100 in the non-power transmitting configuration. In this configuration, the input coupler 112 still occupies the first input position relative to the input shaft 104, which inhibits power transmission from the input shaft 104 to the clutch hub 122. However, the output coupler 118 has been moved (translated) from the first output position to a second output position, by the second actuator 110 via the fork 120, in which the output coupler 118 is positioned apart from the input shaft 104. As a result, the input shaft 104 and the output shaft 106 are rotatable relative to each other, and the input shaft 104 does not transmit power to the output shaft 106.

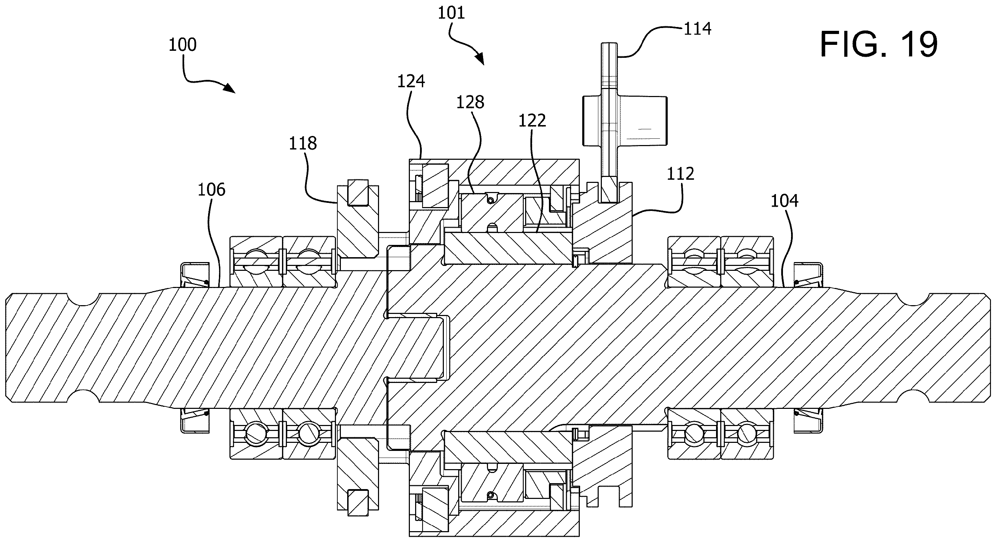

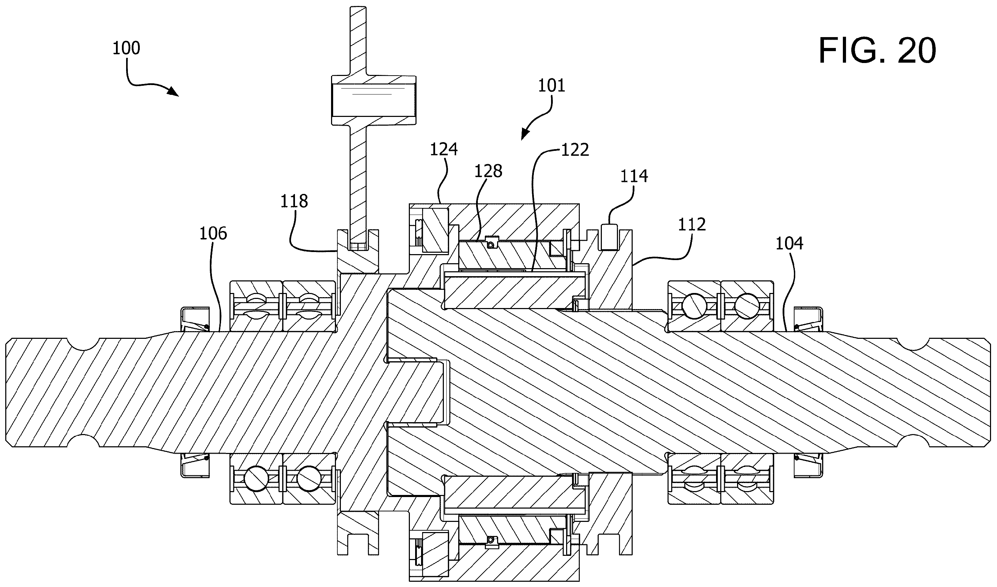

FIGS. 19 and 20 illustrate the internal components of the drive assembly 100 in the power transmitting and overrunning configuration. In this configuration, the output coupler 118 still occupies the second input position relative to the output shaft 106. However, the input coupler 112 has been moved from the first output position to a second output position, by the first actuator 108 via the fork 114, in which the input coupler 112 engages the clutch hub 122, thereby rotatably securing the clutch hub 122 relative to the input shaft 104. The input shaft 104 and the output shaft 106 are thereby operatively coupled via the overrunning clutch 101 such that (A) if the input shaft 104 and the clutch hub 122 rotate faster than the output shaft 106 and the clutch output 124, the clutch hub 122 causes the clutch output 124 and the output shaft 106 to accelerate and thereby rotate together with the input shaft 104. More specifically, the rollers 128 wedge between the clutch hub 122 and the clutch output 124 to cause the output shaft 106 to accelerate and thereby rotate together with the input shaft 104. The input shaft 104 thereby transmits power to the output shaft 106. Conversely, (B) if the output shaft 106 and the clutch output 124 rotate faster than the input shaft 104 and the clutch hub 122, the clutch output 124 slips over the clutch hub 122 and the input shaft 104 and the output shaft 106 thereby rotate relative to each other. More specifically, the rollers 128 slip between the clutch hub 122 and the clutch output 124 to permit the input shaft 104 and the output shaft 106 to rotate relative to each other.

It is also contemplated that a sprag clutch, instead of a roller clutch, could form part of the drive assembly 100 and achieve the same function; that is, replacing the clutch 101 with sprag elements and a cage instead of rollers and a cage. In such embodiments, the inner surfaces 142 would be changed to a smooth diameter and the surfaces 122 would also be changed to a smooth diameter. The sprag elements would lock onto these smooth surfaces and overrun one-way similar to a roller clutch. The anti-rotation plate 134 could be omitted with a sprag clutch.

Although the invention has been described and illustrated with respect to the exemplary embodiments thereof, it should be understood by those skilled in the art that the foregoing and various other changes, omissions and additions may be made therein and thereto, without parting from the spirit and scope of the present invention.

## Claims

1. A drive assembly for a vehicle, the drive assembly comprising:
an input shaft;
an output shaft;
a coupler; and
an overrunning clutch;
wherein the drive assembly is operable in a power transmitting and non-overrunning configuration, a non-power transmitting configuration, and a power transmitting and overrunning configuration, and:
(I) in the power transmitting and non-overrunning configuration the input shaft and the output shaft are operatively coupled via the coupler and thereby rotatably secured relative to each other;
(II) in the non-power transmitting configuration the input shaft and the output shaft are operatively decoupled and thereby rotatable relative to each other; and
(III) in the power transmitting and overrunning configuration the input shaft and the output shaft are operatively coupled via the overrunning clutch such that (A) if the input shaft rotates faster than the output shaft, the overrunning clutch causes the output shaft to accelerate and thereby rotate together with the input shaft, and (B) if the output shaft rotates faster than the input shaft, the overrunning clutch permits the input shaft and the output shaft to rotate relative to each other.

2. The drive assembly of claim 1, wherein the coupler is axially movable relative to the input shaft and the output shaft.

3. The drive assembly of either claim 1 or 2, wherein the coupler is disengaged from one of the input shaft and the output shaft in the non-power transmitting configuration.

4. The drive assembly of any of claims 1-3, wherein the coupler includes an input coupler rotatably secured relative to and translatable along the input shaft,
wherein the overrunning clutch includes:
a clutch hub rotatable relative to the input shaft; and
a clutch output rotatably secured relative to the output shaft; and
wherein in the power transmitting and non-overrunning configuration the input coupler contacts and rotatably drives the clutch hub in a first input position, the clutch output and the clutch hub rotate together, and the input shaft and the output shaft thereby rotate together.

5. The drive assembly of claim 4, further comprising an output coupler translatable along the output shaft, and wherein in the power transmitting and non-overrunning configuration the output coupler contacts both the clutch hub and the clutch output in a first output position, and the input shaft and the output shaft thereby rotate together.

6. The drive assembly of claim 5, wherein in a second output position the output coupler is positioned apart from the clutch hub in the power transmitting and overrunning configuration but is still engaged to the clutch output.

7. The drive assembly of either claim 5 or 6, wherein the output coupler includes:
a base; and
a plurality of protrusions;
wherein the plurality of protrusions contacts both the clutch hub and the clutch output in the power transmitting and non-overrunning configuration.

8. The drive assembly of any of claims 4-7, wherein in a second input position the input coupler is positioned apart from the clutch hub in the non-power transmitting configuration.

9. The drive assembly of any of claims 1-3, wherein the overrunning clutch includes:
a clutch input having a first plurality of teeth; and
a clutch output having a second plurality of teeth;
wherein in the power transmitting and overrunning configuration (A) if the input shaft rotates faster than the output shaft, the first plurality of teeth drivingly engages the second plurality of teeth to cause the output shaft to accelerate and thereby rotate together with the input shaft, and (B) if the output shaft rotates faster than the input shaft, the second plurality of teeth slips over the first plurality of teeth to permit the input shaft and the output shaft to rotate relative to each other.

10. The drive assembly of claim 9, wherein the clutch input is biased toward the clutch output and the first plurality of teeth is thereby biased into engagement with the second plurality of teeth.

11. The drive assembly of any of claims 1-3, wherein the coupler contacts both the input shaft and the output shaft in the power transmitting and non-overrunning configuration.

12. The drive assembly of claim 11, wherein the coupler includes an output coupler translatable along the output shaft between a first output position and a second output position, and an input coupler rotatably secured relative to and translatable along the input shaft between a first input position and a second input position, and
wherein the overrunning clutch includes:
a clutch hub rotatable relative to the input shaft; and
a clutch output rotatably secured relative to the output shaft; and
wherein (II) in the non-power transmitting configuration the input coupler is positioned apart from the clutch hub and the output coupler is positioned apart from the input shaft; and (III) in the power transmitting and overrunning configuration the input coupler contacts and rotatably drives the clutch hub, and the output coupler is positioned apart from the input shaft.

13. The drive assembly of an of claims 1-3, wherein the overrunning clutch includes:
a clutch hub rotatable relative to the input shaft;
a clutch output rotatably secured relative to the output shaft; and
a plurality of rollers positioned between the clutch hub and the clutch output;
wherein in the power transmitting and overrunning configuration (A) if the input shaft rotates faster than the output shaft, the plurality of rollers wedge between the clutch hub and the clutch output to cause the output shaft to accelerate and thereby rotate together with the input shaft, and (B) if the output shaft rotates faster than the input shaft, the plurality of rollers slips between the clutch hub and the clutch output to permit the input shaft and the output shaft to rotate relative to each other.

14. The drive assembly of either claim 8 or 12, further comprising:
a first actuator;
a first fork coupling the first actuator to the input coupler, the first actuator operable to translate the input coupler along the input shaft from the first input position to the second input position and vice versa;
a second actuator; and
a second fork coupling the second actuator to the output coupler, the second actuator operable to move the output coupler from the first output position to the second output position and vice versa.

15. A vehicle comprising an engine for transmitting torque to at least one transmission which rotatably drives a front drive shaft and a rear drive shaft, the front drive shaft includes a first drive shaft section and a second drive shaft section that are coupled through a drive assembly according to any of claims 1-14, the drive assembly being electronically coupled to an electronic controller for changing operating modes or configurations of the drive assembly, the first drive shaft section rotatably coupled to a front differential which rotatably drives front wheels, and the rear drive shaft rotatably coupled to a rear differential which rotatably drives rear wheels.
